# FASCICULE DE BREVET EUROPEEN

(11) **EP 3 827 895 B1**
(45) Date de publication et mention de la délivrance du brevet: **11.05.2022**
(21) Numéro de dépôt: 20209005.6
(22) Date de dépôt: 20.11.2020
(51) Int. Cl.: B01J 8/02, B01J 8/00, B01J 19/24

(54) **RÉACTEUR TUBULAIRE À LIT FIXE**
FESTBETT-RÖHRENREAKTOR
TUBULAR REACTOR WITH FIXED BED

(30) Priorité: 28.11.2019 FR 1913378
(43) Date de publication de la demande: 02.06.2021
(73) Titulaire: Commissariat à l'énergie atomique et aux énergies alternatives, 75015 Paris (FR)
(72) Inventeur: CHAISE, Albin, 38054 GRENOBLE Cedex 09 (FR); BENGAOUER, Alain, 38054 GRENOBLE Cedex 09 (FR)
(74) Mandataire: Brevalex

(56) Documents cités:
- WO-A1-2017/180957
- FR-A1- 2 924 624
- US-A1- 2011 165 483

## Description

### DOMAINE TECHNIQUE

La présente invention se rapport au domaine des réacteurs échangeur. En particulier, la présente invention se rapporte au domaine des réacteurs échangeur catalytiques mettant en œuvre un catalyseur solide, et notamment un catalyseur solide sous forme de poudre.

La présente invention propose à cet égard un réacteur échangeur catalytique susceptible de mettre en œuvre des procédés de synthèses organiques exothermiques. Ces composés organiques peuvent notamment comprendre des carburants de synthèse et du combustible.

### ÉTAT DE LA TECHNIQUE ANTÉRIEURE

Les réacteurs catalytiques utilisant des catalyseurs solides sont largement mis en œuvre pour la synthèse de composés organiques tels que les carburants de synthèse ou les combustibles parmi lesquels on citer les substituts de gaz naturel, le diméthyléther ou encore le méthanol.

Ces composés sont notamment obtenus par réaction d'hydrogène et d'oxyde de carbone en présence d'un catalyseur solide approprié.

Toutefois, les réactions chimiques relatives à la synthèse de ces composés sont très exothermiques, et dégagent par voie de conséquence une quantité de chaleur susceptible de dégrader le catalyseur solide. Il résulte de cette dégradation une réduction du taux de conversion des espèces chimiques en présence, et une diminution de la sélectivité des réactions mises en jeu. Par ailleurs, le catalyseur solide se désactive sous l'effet de la chaleur.

Ainsi, en pratique, ces réactions peuvent être mises en œuvre dans un réacteur-échangeur du type tube-calandre qui comprend un canal réactif pourvu du catalyseur solide et refroidi continument par un fluide caloporteur. Dans ce type de réacteur, les gaz réactifs circulent axialement dans les tubes qui contiennent un catalyseur, par exemple en poudre.

Néanmoins, en dépit de la mise en œuvre d'un refroidissement par le fluide caloporteur, ce type de réacteur reste sensible à la chaleur dégagée par les réactions se produisant dans ledit réacteur.

En particulier, un point chaud, généralement observé à proximité de l'entrée des gaz réactifs, dégrade le catalyseur solide, et réduit donc les performances du réacteur-échangeur.

Afin de limiter ces effets, les solutions suivantes ont été proposées :
- Une réduction de la densité volumique de catalyseur, notamment en déposant ce dernier sur les parois du tube ou d'un insert ou en le diluant dans un milieu non réactif ;
- Une dilution des gaz réactifs avec une partie des produits générés pour diminuer l'activité de la réaction ;
- Réaliser plusieurs points d'injection d'un ou de plusieurs réactifs pour répartir la zone du point chaud sur une plus grande surface ;
- Une réduction des dimensions des tubes ou en y plaçant des pièces conductrices de la chaleur afin d'améliorer le refroidissement des tubes.

Ces solutions ne sont toutefois pas satisfaisantes.

En effet, quand bien même elles permettent de réduire les effets du point chaud, elles sont complexes à mettre en œuvre.

Par ailleurs, leur mise en œuvre diminue la flexibilité d'utilisation du réacteur échangeur, et rendent ce dernier peu compact.

Afin de pallier ces problèmes, il alors été proposé un agencement permettant de répartir la distribution des réactifs sur toute la longueur des tubes. Cette solution permet alors d'obtenir une meilleure homogénéité de la température sur toute la longueur du réacteur.

A cet égard, les documents US3758279, US4374094, EP0560157, IT8021172 et US2997374 proposent des réacteurs-échangeurs mettant en œuvre une distribution des réactifs à partir d'un espace de distribution annulaire. Notamment, ces réacteurs-échangeur, de forme généralement cylindrique, comprennent, agencés de manière coaxiale et à partir de l'extérieur du réacteur, un tube, l'espace de distribution annulaire, une charge de catalyseur et un espace de collecte.

Cet agencement n'est toutefois pas satisfaisant.

En effet, la présence de l'espace de distribution annulaire disposé autour de la charge de catalyseur, limite les transferts de chaleur du catalyseur vers le tube rendant peu efficace les systèmes de refroidissement généralement mis en œuvre. Il reste néanmoins possible d'insérer des éléments conducteurs de chaleur dans le réacteur. Une telle solution reste toutefois incompatible avec les réacteurs comprenant des tubes de faible diamètre.

Inversement, le document CN103990420 propose de mettre en œuvre un insert pourvu d'une chambre de distribution et d'une chambre de collecte, disposée au centre d'un tube et définissant avec ce dernier une espace annulaire logeant le catalyseur solide.

Toutefois, l'agencement proposé dans ce document ne permet pas de répartir de manière homogène au sein de l'espace annulaire. Plus particulièrement, cet agencement ne permet pas d'obtenir un profil de température optimal au sein du catalyseur solide.

Par ailleurs, US 2011/0165483, WO 2017/180957 et FR 2 924 624 divulguent d'autres exemples de réacteurs tubulaires selon l'art antérieur.

Un but de la présente invention est de proposer un réacteur tubulaire à lit fixe permettant une distribution plus uniforme des réactifs au sein du catalyseur solide.

Un autre but de la présente invention est également de proposer un réacteur tubulaire à lit fixe permettant une répartition plus homogène du flux de chaleur généré au sein du catalyseur solide.

Un autre but de la présente invention est également de proposer un réacteur tubulaire permettant une meilleure gestion du refroidissement.

Un autre but de la présente invention est également de proposer un réacteur tubulaire pour lequel la fiabilité et la durée de vie sont améliorées au regard des réacteurs connus de l'état de la technique.

Un autre but de la présente invention est de proposer un réacteur tubulaire permettant d'optimiser (augmenter) le temps de passage des gaz dans le lit fixe de poudre catalytique.

### EXPOSÉ DE L'INVENTION

Les buts de la présente invention sont, au moins en partie, atteints par un réacteur tubulaire à lit fixe selon la revendication 1.

Il est entendu que dans la mesure où le réacteur selon la présente invention est tubulaire, le tube creux et l'insert creux sont nécessairement de forme cylindrique.

Par ailleurs, dès lors que l'insert creux est disposé dans le tube creux et de manière coaxiale à ce dernier, l'espace annulaire présente une symétrie de révolution.

Ainsi, le réacteur selon la présente invention permet de distribuer les gaz réactifs, du fait de l'étendue de l'ouverture de distribution, de manière relativement homogène dans l'espace annulaire. Ces derniers réagissent alors avec le lit de poudre catalytique sur toute la section couverte par l'ouverture de distribution. Les produits issus de la réaction des gaz, ainsi que les gaz n'ayant pas réagi sont collectés au niveau de l'ouverture de collecte et évacués du réacteur par l'ouverture d'évacuation opposée à l'ouverture d'admission.

Cet agencement pour lequel l'admission des gaz se fait par une extrémité et l'évacuation par l'autre extrémité permet une meilleure répartition des espèces réactives (les gaz) dans l'espace annulaire, et par voie de conséquence une meilleure répartition de la chaleur susceptible d'être dégagée lors de la réaction des espèces réactives dans l'espace annulaire.

Cette meilleure répartition de la chaleur dégagée permet de considérer un système de refroidissement moins puissant et donc de plus petites dimensions.

L'agencement selon la présente invention permet donc d'envisager un réacteur plus compact, et d'une fiabilité améliorée au regard des réacteurs tubulaires connus de l'état de la technique.

Selon un mode de réalisation, l'au moins une chambre de distribution est obturée au niveau de la deuxième extrémité, et l'au moins une chambre de collecte est obturée au niveau de la première extrémité.

Selon un mode de réalisation, le réacteur comprend au niveau de la première extrémité et au niveau de la deuxième extrémité, respectivement, un espace distributeur et un espace collecteur entre lesquels l'insert est disposé.

Selon un mode de réalisation, la poudre catalytique est retenue dans l'espace annulaire par un joint en matière fibreuse au niveau de chacune des extrémités de l'espace annulaire.

Selon un mode de réalisation, le joint en matière fibreuse est maintenu en compression contre la poudre catalytique par un ressort, le ressort étant en butée contre une plaque de maintien liée mécaniquement au tube.

Le joint en matière fibreuse en combinaison avec le ou les ressorts permet de mieux compacter la poudre catalytique et de prévenir l'attrition de cette dernière lors de la manipulation ou le transport du réacteur.

Selon un mode de réalisation, la paroi externe est dépourvue d'ouverture sur une première section et une deuxième section qui s'étendent à partir, respectivement, de la première extrémité et de la deuxième extrémité, la première section et la deuxième section étant en recouvrement avec le lit de poudre sur une hauteur H, la hauteur H étant comprise entre 0,5 fois et 10 fois, avantageusement comprise entre 1 fois et 2 fois, la distance D₁ séparant une ouverture de distribution d'une ouverture de collecte immédiatement adjacente, et mesurée le long de la surface externe de la paroi externe.

Ainsi, un tel agencement permet d'imposer un temps de passage aux gaz réactifs susceptibles de pénétrer dans l'espace annulaire par le joint fibreux.

Selon un mode de réalisation, l'insert creux est muni de moyens de centrage maintenant ce dernier en position coaxiale avec le tube creux, de manière avantageuse, les moyens de centrage comprennent des bossages formés sur la deuxième paroi.

Ces moyens de centrage permettent un montage plus facile du réacteur.

Selon un mode de réalisation, la surface d'une section de la chambre de distribution selon un plan de coupe transversal à l'axe longitudinal XX' diminue de la première extrémité vers la deuxième extrémité, avantageusement, ladite surface est nulle au niveau de la deuxième extrémité.

Les méthodes de fabrication additive, et notamment les techniques de fabrication 3D permettent de réaliser ces structures complexes sous forme d'une pièce monobloc.

Selon un mode de réalisation, la surface d'une section de la chambre de collecte selon un plan de coupe transversal à l'axe longitudinal XX' augmente de la première extrémité vers la deuxième extrémité, avantageusement, ladite surface est nulle au niveau de la première extrémité.

Selon un mode de réalisation, l'ouverture de collecte et l'ouverture de distribution présentent une largeur comprise entre 1/100 et 1/2, avantageusement comprise entre 1/20 et 1/4, du diamètre du tube creux.

Selon un mode de réalisation, l'ouverture de collecte et l'ouverture de distribution comprennent chacune un filtre prévenant le passage de poudre catalytique dans l'une ou l'autre des chambres de collecte ou de distribution.

Selon un mode de réalisation, le filtre comprend une pluralité de plans de fibres inclinées.

Selon un mode de réalisation, l'insert creux forme une pièce monobloc.

### BRÈVE DESCRIPTION DES DESSINS

D'autres caractéristiques et avantages apparaîtront dans la description qui va suivre du réacteur tubulaire à lit fixe selon l'invention, donnés à titre d'exemples non limitatifs, en référence aux dessins annexés dans lesquels :
La figure 1 est une représentation schématique d'un réacteur tubulaire à lit fixe selon une première variante de la présente invention, en particulier, la figure 1 représente le réacteur selon un plan coupe longitudinal passant par un axe longitudinal XX' dudit réacteur;
La figure 2 est une représentation schématique du réacteur de la figure 1 selon un plan de coupe transversal perpendiculaire à l'axe longitudinal ;
La figure 3 est une représentation filtre, et notamment d'une filtre formé de 4 plans de fibres, susceptible d'être mis en œuvre dans le réacteur tubulaire selon la présente invention ;
La figure 4 est une représentation d'un réacteur tubulaire à lit fixe selon la première variante de la présente invention au niveau de la première extrémité illustrant l'agencement du joint et du ressort retenant le lit de poudre catalytique ;
La figure 5 est une représentation schématique de l'insert creux selon le plan de coupe AA' de la figure 4 ;
La figure 6 est une représentation schématique d'un insert selon une deuxième variante de la présente invention, en particulier, la figure 6 représente le réacteur selon un plan coupe longitudinal passant par un axe longitudinal XX' dudit réacteur;
Les figures 7A, 7B, 7C, 7D, 7E sont des vues, respectivement, selon les plans de coupe A, B, C, D et E de l'insert creux représenté à la figure 6 ;
La figure 8 est une représentation schématique d'un insert selon une troisième variante de la présente invention, en particulier, la figure 8 représente le réacteur selon un plan coupe longitudinal passant par un axe longitudinal XX' dudit réacteur;
Les figures 9, 10 sont des vues, respectivement, selon les plans de coupe CC' et DD' de l'insert creux représenté à la figure 8.

### EXPOSÉ DÉTAILLÉ DE MODES DE RÉALISATION PARTICULIERS

La présente invention concerne un réacteur-échangeur tubulaire à lit de poudre catalytique fixe. Notamment le lit de poudre catalytique est confiné dans un espace annulaire délimité par une première paroi d'un tube creux et une deuxième paroi d'un insert creux disposé dans ledit tube et de manière coaxiale à ce dernier.

L'insert creux selon la présente invention est notamment agencé pour permettre une admission de gaz réactifs selon une première extrémité du réacteur dans une chambre de distribution dudit insert.

Ces derniers sont ensuite distribués sur une section de l'espace annulaire étendue sur une longueur L, parallèle à un axe longitudinal du réacteur, par une ouverture de distribution permettant un passage desdits gaz de la chambre de distribution vers ledit espace annulaire.

Les produits issus de la réaction entre espèces réactives sont ensuite collectés, par l'intermédiaire d'une ouverture de collecte, dans une chambre de collecte de l'insert creux, isolée de la chambre de distribution par une paroi séparatrice.

L'évacuation des produits s'effectue par une ouverture d'évacuation de la chambre de collecte au niveau de la deuxième extrémité.

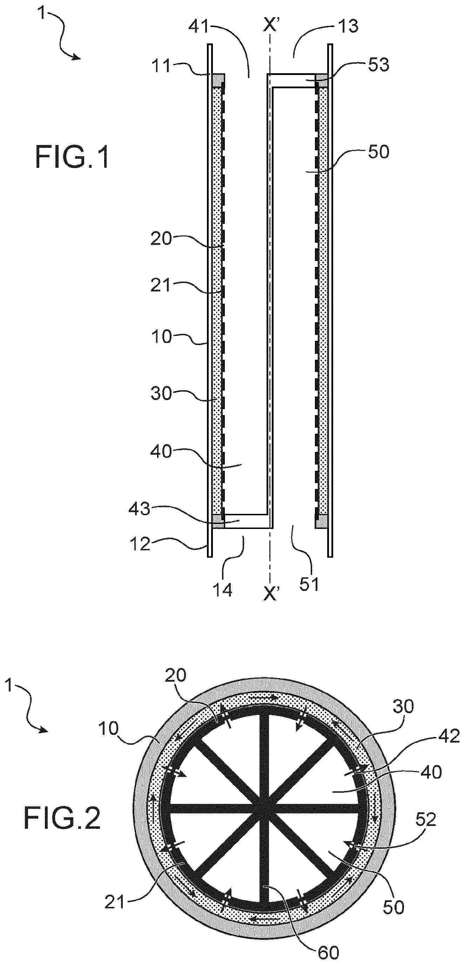

Aux figures 1 et 2, on peut voir un exemple de réalisation d'un réacteur tubulaire à lit fixe selon une première variante de la présente invention.

Le réacteur tubulaire 1 selon les présente invention comprend un tube creux 10 qui, s'étend selon un axe longitudinal XX', entre une première extrémité 11 et une deuxième extrémité 12.

Le tube creux 10 peut présenter une symétrie de révolution autour de l'axe longitudinal XX'.

Le tube creux 10 peut comprendre un métal, et notamment un métal choisi parmi : acier, alliage d'aluminium, de cuivre, de nickel.

Le diamètre de la surface interne du tube creux peut être compris entre 5 mm et 100 mm.

La paroi, dite première paroi, formant le tube creux 10 peut présenter une épaisseur comprise entre 0,5 mm et 10 mm.

Le tube creux peut présenter une longueur comprise entre 10 fois et 200 fois son diamètre interne.

Le réacteur tubulaire 1 comprend également un insert creux 20 qui s'étend également selon l'axe longitudinal XX' et présente une forme cylindrique.

L'insert creux 20 est notamment logé dans le volume V du tube creux de manière coaxiale à ce dernier. En particulier, l'insert 20 comprend une paroi, dite deuxième paroi 21, qui délimite avec la première paroi du tube creux un espace annulaire 30.

L'espace annulaire 30 est, à cet égard, rempli d'une poudre catalytique qui sera le siège des réactions de conversion de gaz réactifs susceptibles de transiter dans le réacteur tubulaire 1.

L'espace annulaire 30 peut présenter une épaisseur, définie comme la distance entre la première paroi et la deuxième paroi, comprise entre 2% et 20 % du diamètre interne de la première paroi.

L'insert creux 20 peut être une pièce monobloc.

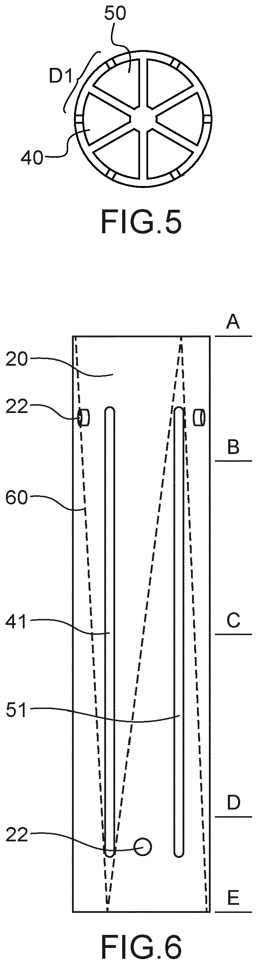

De manière particulièrement avantageuse, l'insert creux 20 peut être muni de moyens de centrage maintenant ce dernier en position coaxiale avec le tube creux. Par exemple, tel que représenté à la figure 6 relative à une seconde variante de la présente invention discutée dans la suite de l'énoncé, les moyens de centrage comprennent des bossages 22 formés sur la deuxième paroi.

Ces moyens de centrage permettent notamment de considérer un insert creux d'une longueur au moins 20 fois supérieure au diamètre dudit insert.

Par ailleurs, ces moyens permettent également de faciliter le montage du réacteur tubulaire 1.

L'insert creux 20 comprend par ailleurs au moins une chambre de distribution 40 et au moins une chambre de collecte 50. Notamment, l'insert creux 20 peut comprendre entre 1 et 4 chambres de distribution 40 et entre 1 et 4 chambres de collecte 50.

Les chambres de distribution 40 et les chambres de collecte 50 sont avantageusement disposées en alternance, s'étendent sur toute la longueur de l'insert creux 20 et sont séparées les unes des autres par des parois séparatrices 60.

Plus particulièrement, les parois séparatrices 60 s'étendent sur toute la longueur de l'insert creux dans le volume défini par l'insert creux 20.

Par ailleurs, l'au moins une chambre de distribution 40 comprend une ouverture d'admission 41 au niveau d'une extrémité dudit insert 20 par laquelle un ou des gaz réactifs sont susceptibles d'être admis.

De manière équivalente, l'au moins une chambre de collecte 50 comprend une ouverture d'évacuation 51 au niveau de l'autre extrémité de l'insert creux 20 et par laquelle un ou plusieurs gaz sont susceptibles d'être évacués.

L'insert creux 20 est également pourvu d'au moins une ouverture distributrice 42 et d'au moins une ouverture de collecte 52.

En particulier, l'ouverture distributrice 42 forme un passage perméable aux gaz réactifs de la chambre distributrice 40 vers l'espace annulaire 30.

De manière équivalente, l'ouverture de collecte 52 forme un passage perméable aux gaz de l'espace annulaire 30 vers la chambre de collecte 50.

Les ouvertures de distribution 42 et collectrice 52 s'étendent sur une longueur L, et parallèlement à l'axe longitudinal XX'.

Avantageusement, la longueur L est supérieure à la moitié, avantageusement aux trois quarts de la longueur d'extension selon l'axe longitudinal XX' de l'espace annulaire 30.

Par ailleurs, l'au moins une chambre de distribution 40 est obturée au niveau de la deuxième extrémité 12, tandis que l'au moins une chambre de collecte 50 est obturée au niveau de la première extrémité 11. À cet égard, tel qu'illustré à la figure 1, la chambre de distribution 40 est obturée par une paroi de distribution 43, tandis que la chambre de collecte 50 est obturée par une paroi de collecte 53.

De manière complémentaire, le réacteur tubulaire 1 peut comprendre au niveau de la première extrémité 11 et au niveau de la deuxième extrémité 12, respectivement, un espace distributeur 13 et un espace collecteur 14 entre lesquels l'insert creux 20 est disposé.

De manière avantageuse, l'ouverture de collecte 42 et l'ouverture de distribution 52 présentent une largeur comprise entre 1/100 et 1/2, avantageusement comprise entre 1/20 et 1/4, du diamètre du tube creux 10.

Toujours de manière avantageuse, l'ouverture de collecte 52 et l'ouverture de distribution 42 comprennent chacune un filtre 60 prévenant le passage de poudre catalytique dans l'une ou l'autre des chambres de collecte 50 ou de distribution 40.

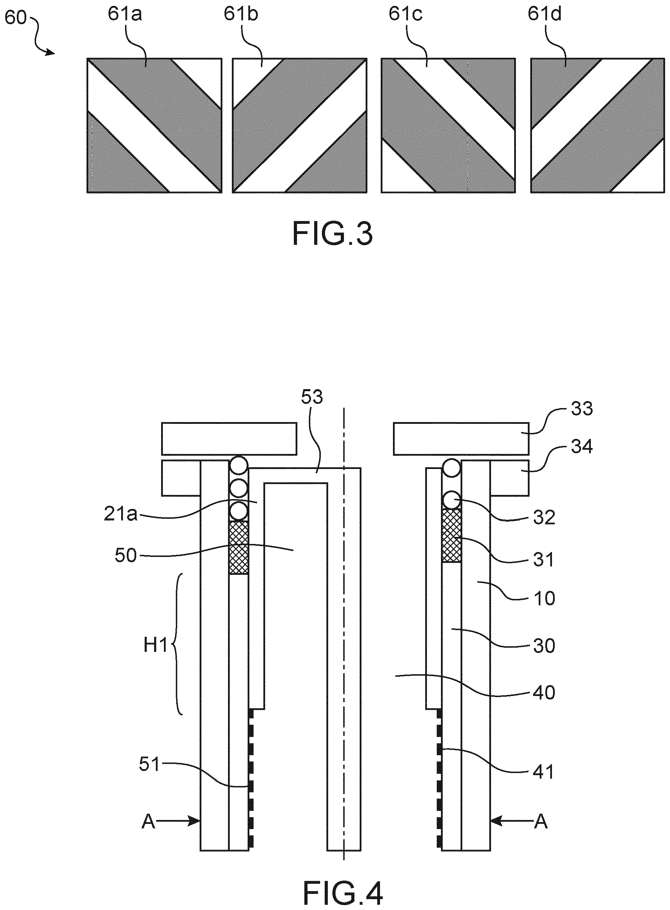

Par exemple, et tel qu'illustré à la figure 3, le filtre 60 peut comprendre une pluralité de plans 61a, 61b, 61c et 61d comprenant des fibres. L'exemple illustré à la figure 3 comprend en particulier 4 plans, pourvus chacun de fibres rectangulaires ou rondes et inclinées à +/-45° par rapport à l'axe longitudinal XX'. Plus particulièrement, les fibres de deux plans successifs sont orientées selon deux angles différents, et sont notamment perpendiculaires d'un plan à l'autre.

Ainsi, lors du fonctionnement du réacteur, un ou des gaz réactifs sont admis dans la chambre de distribution 40 par l'ouverture de distribution. Ces gaz passent ensuite au travers de l'ouverture de distribution 42 et s'écoulent dans l'espace annulaire 30 afin d'être mis en contact avec le lit de poudre catalytique. Lors de cet écoulement dans l'espace annulaire, qui se produit essentiellement entre une ouverture de distribution et une ouverture de collecte qui lui est immédiatement adjacente, les gaz réactifs sont convertis, au moins en partie, en produits. Ces derniers, ainsi que la fraction de gaz réactifs n'ayant pas réagi, passent au travers de l'ouverture de collecte ainsi considérée et sont collectés dans la chambre de collecte. Les produits et des gaz réactifs n'ayant pas réagi ainsi collectés sont ensuite évacuées par l'ouverture d'évacuation.

Ainsi, l'étendue des ouvertures de distribution sur la longueur L permet de distribuer les gaz réactif dans l'espace annulaire sur ladite longueur L. En d'autres termes, cet agencement permet de distribuer la quantité de chaleur susceptible d'être produite lors de la conversion des gaz réactifs en produits sur toute la longueur L. Cet agencement permet ainsi de limiter l'augmentation de température locale du lit de poudre catalytique. L'étendue sur la longueur L des ouvertures de collecte permet, selon un principe équivalent, de limiter l'échauffement du lit de poudre catalytique.

Par ailleurs, la disposition des ouvertures d'admission et d'évacuation sur des extrémités opposées de l'insert creux contribue également à une meilleure distribution des réactifs au sein de l'espace annulaire 30 et par voie de conséquence à une meilleure homogénéisation de la température du lit de poudre catalytique.

Tous ces aspects contribuent à limiter l'apparition de points chauds et ainsi préserver le lit de poudre catalytique. Il en résulte une meilleure fiabilité du réacteur tubulaire et une augmentation de sa durée de vie.

Selon un aspect particulièrement avantageux illustré à la figure 4, la poudre catalytique est retenue dans l'espace annulaire 30 par un joint 31 en matière fibreuse au niveau de chacune des extrémités dudit espace annulaire 30.

Dans la mesure où le joint est en matière fibreuse, ce dernier est nécessairement poreux et donc perméable aux gaz réactifs.

La matière fibreuse peut à cet égard comprendre au moins un des éléments choisi parmi : fibre de verre, fibre de céramique, fibre de métal, fibre de carbone, fibre de matériau polymère.

Le joint 31 peut notamment être sous forme d'une tresse, d'une gaine, d'une cordelette ou simplement comprendre un bourrage de la matière fibreuse.

La matière fibreuse est avantageusement un isolant thermique et présente une conductivité thermique sensiblement équivalente à celle du catalyseur utilisé (0,2 W/m/K à 10 W/m/K).

Selon un mode de réalisation avantageux, le joint 31 en matière fibreuse est maintenu en compression contre la poudre catalytique par un ressort 32. Par exemple, le ressort 32 est en butée contre une plaque de maintien 33 lié mécaniquement au tube par une bague 34.

Le joint 31 en matière fibreuse en combinaison avec le ou les ressorts permet de mieux compacter la poudre catalytique et de prévenir l'attrition de cette dernière lors de la manipulation ou le transport du réacteur.

Dans la mesure où le joint 31 est poreux, les gaz réactifs peuvent pénétrer dans l'espace annulaire directement sans passer par la chambre de distribution 40.

Dans ce cas de figure (figure 4), il est particulièrement avantageux de prévoir un agencement de l'insert creux 20 permettant d'imposer à ce gaz réactif un chemin de parcours prédéterminé dans l'espace annulaire afin de favoriser sa conversion au contact du lit de poudre catalytique. Ce parcours prédétermineé est d'une longueur comprise entre 0,2 fois et 10 fois, avantageusement comprise entre 1 fois et 2 fois, la distance D₁ (figure 5) séparant une ouverture de distribution 41 d'une ouverture de collecte 51 immédiatement adjacente, et mesurée le long de la surface externe de la paroi externe

À cette fin, la deuxième paroi 21 peut être dépourvue d'ouverture sur une première section 21a et une deuxième section qui s'étendent à partir, respectivement, de la première extrémité 11 et de la deuxième extrémité 12.

À cet égard la première section 21a et la deuxième section sont en recouvrement avec le lit de poudre sur une hauteur H1. La hauteur H1 étant comprise entre 0,5 fois et 10 fois, avantageusement entre une fois et 2 fois, la distance D₁ séparant une ouverture de distribution d'une ouverture de collecte immédiatement adjacente, et mesurée le long de la surface externe de la paroi externe.

La figure 6 illustre une deuxième variante de la présente invention qui reprend pour l'essentiel les caractéristiques de la première variante. L'insert creux 20 relative à cette deuxième variante est avantageusement fabriqué selon une technique de fabrication additive.

Selon cette deuxième variante, la chambre de distribution 40 présente un profil convergent de la première extrémité vers la deuxième extrémité 12.

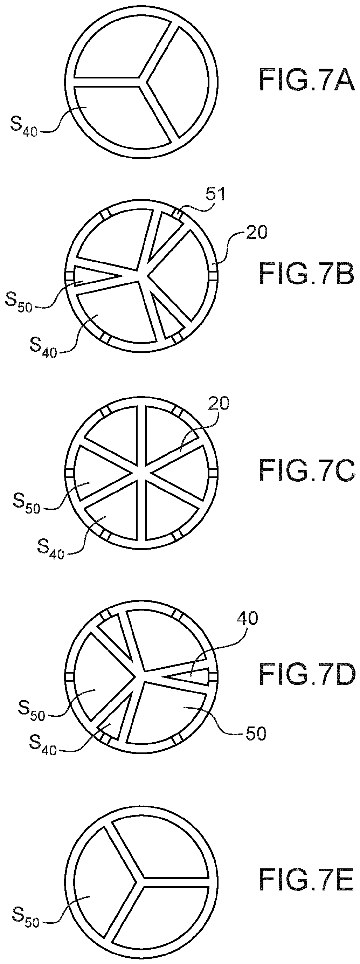

En d'autres termes, la surface S₄₀ d'une section de la chambre de distribution selon un plan de coupe transversal à l'axe longitudinal XX' diminue de la première extrémité vers la deuxième extrémité (figures 7a à 7e), avantageusement, ladite surface est nulle au niveau de la deuxième extrémité.

De manière équivalente, la surface S₅₀ d'une section de la chambre de collecte selon un plan de coupe transversal à l'axe longitudinal XX' augmente de la première extrémité vers la deuxième extrémité, avantageusement, ladite surface est nulle au niveau de la première extrémité.

Cet agencement des chambres de distribution et de collecte permet de minimiser les pertes de charge liées à la circulation des gaz dans lesdites. Les inhomogénéités de débit dans l'espace annulaire sont ainsi réduites.

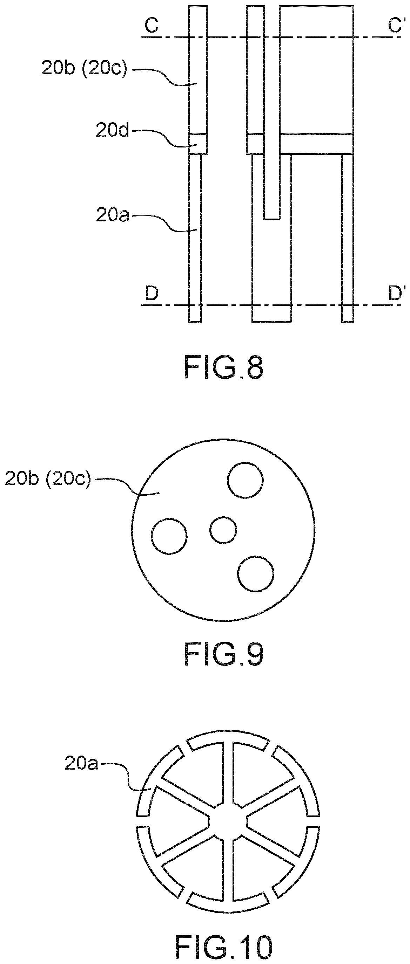

La figure 8 représente un insert creux 20 susceptible d'être mis en œuvre selon une troisième variante de la présente invention. Cette troisième variante reprend pour l'essentiel les caractéristiques relatives à la première et à la deuxième variante.

L'insert 20 relatif à cette deuxième variante peut être fabriqué par usinage, par découpage, par électroérosion, par extrusion.

En particulier, l'insert 20 comprend selon cette variante un corps principal 20a intercalé entre deux corps terminaux 20b, et assemblés au moyen d'un joint 20d.

Les deux corps terminaux 20b, illustrés à la figure 8, comprennent paroi cylindrique non perméable au gaz reproduisant la première section 21a décrite dans le cadre de la première variante, et comprend des ouvertures de distribution 41 (ou de collecte 51).

Le réacteur tubulaire selon la présente invention est avantageusement mis en œuvre pour la synthèse du méthane, du méthanol, du diméthyléther ou encore pur mettre en œuvre la synthèse de Fisher-Tropsch.

## Revendications

1. Réacteur tubulaire (1) à lit fixe qui s'étend, selon un axe longitudinal XX', entre une première extrémité (11) et une deuxième extrémité (12),
ledit réacteur comprend un lit de poudre catalytique confiné dans un espace annulaire (30) délimité par une première paroi d'un tube creux et une deuxième paroi d'un insert creux (20), disposé dans le tube creux (10) et de manière coaxiale à ce dernier,
l'insert creux (20) comprend au moins une chambre de distribution (40) et au moins une chambre de collecte (50), séparées l'une de l'autres par une paroi séparatrice (60), et comprenant, respectivement, une ouverture d'admission (41) de gaz au niveau de la première extrémité (11) et une ouverture d'évacuation (51) de gaz au niveau de la deuxième extrémité (12),
la deuxième paroi comprend au moins une ouverture distributrice (42) et au moins une ouverture collectrice (52), qui s'étendent sur une longueur L, l'ouverture distributrice (42) permettant la distribution d'un gaz susceptible d'être admis par l'ouverture d'admission (41) de la chambre de distribution (40) vers l'espace annulaire (30), et l'ouverture collectrice (52) permettant la collecte du gaz distribué dans l'espace annulaire (30) par la chambre de collecte (50).

2. Réacteur selon la revendication 1, dans lequel l'au moins une chambre de distribution (40) est obturée au niveau de la deuxième extrémité (12), et l'au moins une chambre de collecte (50) est obturée au niveau de la première extrémité (11).

3. Réacteur selon la revendication 1 ou 2, dans lequel ledit réacteur comprend au niveau de la première extrémité (11) et au niveau de la deuxième extrémité (12), respectivement, un espace distributeur et un espace collecteur entre lesquels l'insert est disposé.

4. Réacteur selon l'une des revendications 1 à 3, dans lequel la poudre catalytique est retenue dans l'espace annulaire (30) par un joint (31) en matière fibreuse au niveau de chacune des extrémités de l'espace annulaire (30).

5. Réacteur selon la revendication 4, dans lequel le joint (31) en matière fibreuse est maintenu en compression contre la poudre catalytique par un ressort (32), le ressort (32) étant en butée contre une plaque de maintien lié mécaniquement du tube.

6. Réacteur selon l'une des revendications 1 à 5, dans lequel la paroi externe est dépourvue d'ouverture sur une première section et une deuxième section qui s'étendent à partir, respectivement, de la première extrémité (11) et de la deuxième extrémité (12), la première section et la deuxième section étant en recouvrement avec le lit de poudre sur une hauteur H1, la hauteur H1 étant comprise entre 0,2 fois et 10 fois, avantageusement comprise entre 1 fois et 2 fois, la distance D₁ séparant une ouverture de distribution d'une ouverture de collecte (52) immédiatement adjacente, et mesurée le long de la surface externe de la paroi externe.

7. Réacteur selon l'une des revendications 1 à 6, dans lequel l'insert creux (20) est muni de moyens de centrage maintenant ce dernier en position coaxiale avec le tube creux, de manière avantageuse, les moyens de centrage comprennent des bossages formés sur la deuxième paroi.

8. Réacteur selon l'une des revendications 1 à 7, dans lequel la surface d'une section de la chambre de distribution (40) selon un plan de coupe transversal à l'axe longitudinal XX' diminue de la première extrémité (11) vers la deuxième extrémité (12), avantageusement, ladite surface est nulle au niveau de la deuxième extrémité (12).

9. Réacteur selon l'une des revendications 1 à 8, dans lequel la surface d'une section de la chambre de collecte (50) selon un plan de coupe transversal à l'axe longitudinal XX' augmente de la première extrémité (11) vers la deuxième extrémité (12), avantageusement, ladite surface est nulle au niveau de la première extrémité (11).

10. Réacteur selon l'une des revendications 1 à 9, dans lequel l'ouverture de collecte (52) et l'ouverture de distribution présentent une largeur comprise entre 1/100 et 1/2, avantageusement comprise entre 1/20 et 1/4, du diamètre du tube creux.

11. Réacteur selon l'une des revendications 1 à 10, dans lequel l'ouverture de collecte (52) et l'ouverture de distribution comprennent chacune un filtre (60) prévenant le passage de poudre catalytique dans l'une ou l'autre des chambres de collecte ou de distribution.

12. Réacteur selon la revendication 11, dans lequel le filtre (60) comprend une pluralité de plan de fibres inclinées.

13. Réacteur selon l'une des revendications 1 à 12, dans lequel l'insert creux (20) forme une pièce monobloc.

## Patentansprüche

1. Röhrenreaktor (1) mit Festbett, der sich entlang einer Längsachse XX' zwischen einem ersten Ende (11) und einem zweiten Ende (12) erstreckt,
der Reaktor umfasst ein Bett aus katalytischem Pulver, das in einem Ringraum (30) eingeschlossen ist, der durch eine erste Wand eines Hohlrohres und eine zweite Wand eines Hohleinsatzes (20), angeordnet in dem Hohlrohr (10) und koaxial zu diesem, begrenzt ist,
der Hohleinsatz (20) umfasst mindestens eine Verteilerkammer (40) und mindestens eine Sammelkammer (50), die durch eine Trennwand (60) voneinander getrennt sind und jeweils eine Gaseinlassöffnung (41) auf Höhe des ersten Endes (11) und eine Gasauslassöffnung (51) auf Höhe des zweiten Endes (12) umfassen,
die zweite Wand umfasst mindestens eine Verteileröffnung (42) und mindestens eine Sammelöffnung (52), die sich über eine Länge L erstrecken, wobei die Verteileröffnung (42) die Verteilung eines Gases, das geeignet ist, durch die Einlassöffnung (41) der Verteilerkammer (40) eingelassen zu werden, zu dem Ringraum (30) gestattet und die Sammelöffnung (52) das Sammeln des in dem Ringraum (30) verteilten Gases durch die Sammelkammer (50) gestattet.

2. Reaktor nach Anspruch 1, wobei die mindestens eine Verteilerkammer (40) auf Höhe des zweiten Endes (12) angeschlossen ist und die mindestens eine Sammelkammer (50) auf Höhe des ersten Endes (11) abgeschlossen ist.

3. Reaktor nach Anspruch 1 oder 2, wobei der Reaktor auf Höhe des ersten Endes (11) und auf Höhe des zweiten Endes (12) jeweils einen Verteilerraum und einen Sammelraum aufweist, zwischen denen der Einsatz angeordnet ist.

4. Reaktor nach einem der Ansprüche 1 bis 3, wobei das katalytische Pulver im Ringraum (30) durch eine Dichtung (31) aus Fasermaterial auf Höhe jedes Endes des Ringraums (30) zurückgehalten wird.

5. Reaktor nach Anspruch 4, wobei die Dichtung (31) aus Fasermaterial durch eine Feder (32) gegen das katalytische Pulver unter Druck gehalten wird, wobei die Feder (32) an einer Halteplatte anliegt, die mechanisch mit dem Rohr verbunden ist.

6. Reaktor nach einem der Ansprüche 1 bis 5, wobei die äußere Wand keine Öffnung an einem ersten Abschnitt und einem zweiten Abschnitt, die sich jeweils von dem ersten Ende (11) und dem zweiten Ende (12) erstrecken, hat, wobei der erste Abschnitt und der zweite Abschnitt sich mit dem Pulverbett auf einer Höhe H1 überlappen, wobei die Höhe H1 zwischen dem 0,2-fachen und dem 10-fachen, vorteilhafterweise zwischen dem 1-fachen und dem 2-fachen liegt, wobei der Abstand D₁ eine Verteileröffnung von einer unmittelbar benachbarten Sammelöffnung (52) trennt und entlang der Außenfläche der äußeren Wand gemessen wird.

7. Reaktor nach einem der Ansprüche 1 bis 6, wobei der Hohleinsatz (20) mit Zentriermitteln versehen ist, die diesen in koaxialer Lage mit dem Hohlrohr halten, wobei die Zentriermittel vorteilhafterweise Vorsprünge umfassen, die an der zweiten Wand ausgebildet sind.

8. Reaktor nach einem der Ansprüche 1 bis 7, wobei die Oberfläche eines Abschnitts der Verteilerkammer (40) entlang einer Schnittebene quer zur Längsachse XX' vom ersten Ende (11) zum zweiten Ende (12) abnimmt, wobei die Fläche vorteilhafterweise auf Höhe des zweiten Endes (12) Null ist.

9. Reaktor nach einem der Ansprüche 1 bis 8, wobei die Fläche eines Abschnitts der Sammelkammer (50) entlang einer Schnittebene quer zur Längsachse XX' vom ersten Ende (11) zum zweiten Ende (12) zunimmt, wobei die Fläche vorteilhafterweise auf Höhe des ersten Endes (11) Null ist.

10. Reaktor nach einem der Ansprüche 1 bis 9, wobei die Sammelöffnung (52) und die Verteileröffnung eine Breite zwischen 1/100 und 1/2, vorteilhafterweise zwischen 1/20 und 1/4 des Durchmessers des Hohlrohres aufweisen.

11. Reaktor nach einem der Ansprüche 1 bis 10, wobei die Sammelöffnung (52) und die Verteileröffnung jeweils einen Filter (60) umfassen, der den Durchgang von katalytischem Pulver in eine der Sammelkammer und der Verteilerkammer verhindert.

12. Reaktor nach Anspruch 11, wobei der Filter (60) eine Vielzahl von geneigten Faserebenen umfasst.

13. Reaktor nach einem der Ansprüche 1 bis 12, wobei der Hohleinsatz (20) integral ausgebildet ist.

## Claims

1. A tubular reactor (1) with a fixed bed which extends, according to a longitudinal axis XX', between a first end (11) and a second end (12),
said reactor comprises a catalytic powder bed confined within an annular space (30) delimited by a first wall of a hollow tube and a second wall of a hollow insert (20), disposed in the hollow tube (10) and coaxially with the latter,
the hollow insert (20) comprises at least one distribution chamber (40) and at least one collection chamber (50), separated from each other by a splitting wall (60), and comprising, respectively, a gas intake opening (41) at the first end (11) and a gas evacuation opening (51) at the second end (12),
the second wall comprises at least one distributing opening (42) and at least one collecting opening (52), which extend over a length L, the distributing opening (42) allowing the distribution of a gas that could be drawn by the intake opening (41) of the distribution chamber (40) towards the annular space (30), and the collecting opening (52) allowing the collection of the gas distributed in the annular space (30) by the collection chamber (50).

2. The reactor according to claim 1, wherein the at least one distribution chamber (40) is plugged at the second end (12), and the at least one collection chamber (50) is plugged at the first end (11).

3. The reactor according to claim 1 or 2, wherein said reactor comprises at the first end (11) and at the second end (12), respectively, a distributor space and a collector space between which the insert is disposed.

4. The reactor according to one of claims 1 to 3, wherein the catalytic powder is retained in the annular space (30) by a gasket (31) made of a fibrous material at each of the ends of the annular space (30).

5. The reactor according to claim 4, wherein the gasket (31) made of a fibrous material is held in compression against the catalytic powder by a spring (32), the spring (32) abutting against a mechanically-linked holding plate of the tube.

6. The reactor according to one of claims 1 to 5, wherein the outer wall has no opening on a first section and a second section which extend from the first end (11) and the second end (12), respectively, the first section and the second section overlapping with the powder bed over a height H1, the height H1 being comprised between 0.2 times and 10 times, advantageously comprised between 1 time and 2 times, the distance D₁ separating a distribution opening from an immediately adjacent collection opening (52), and measured along the outer surface of the outer wall.

7. The reactor according to one of claims 1 to 6, wherein the hollow insert (20) is provided with centring means holding the latter in a position coaxial with the hollow tube, advantageously, the centring means comprise bosses formed on the second wall.

8. The reactor according to one of claims 1 to 7, wherein the surface of a section of the distribution chamber (40) according to a sectional plane transverse to the longitudinal axis XX' decreases from the first end (11) towards the second end (12), advantageously, said surface is zero at the second end (12).

9. The reactor according to one of claims 1 to 8, wherein the surface of a section of the collection chamber (50) according to a sectional plane transverse to the longitudinal axis XX' increases from the first end (11) towards the second end (12), advantageously, said surface is zero at the first end (11).

10. The reactor according to one of claims 1 to 9, wherein the collection opening (52) and the distribution opening have a width comprised between 1/100 and 1/2, advantageously comprised between 1/20 and 1/4, of the diameter of the hollow tube.

11. The reactor according to one of claims 1 to 10, wherein the collection opening (52) and the distribution opening each comprises a filter (60) preventing the passage of catalytic powder into either one of the collection or distribution chambers.

12. The reactor according to claim 11, wherein the filter (60) comprises a plurality of inclined fibre planes.

13. The reactor according to one of claims 1 to 12, wherein the hollow insert (20) forms a monolithic part.
